# EUROPEAN PATENT SPECIFICATION

(11) **EP 4 105 906 B1**
(45) Date of publication and mention of the grant of the patent: **13.03.2024**
(21) Application number: 22165371.0
(22) Date of filing: 30.03.2022
(51) Int. Cl.: G08B 21/24, G06V 20/59, B60J 5/04, B60R 7/04, B60R 25/01

(54) **VEHICLE DOOR, VEHICLE AND DRIVING TRAINING SYSTEM**
FAHRZEUGTÜR, FAHRZEUG UND FAHRTRAININGSSYSTEM
PORTIÈRE DE VÉHICULE, VÉHICULE ET SYSTÈME D'ENTRAÎNEMENT À LA CONDUITE

(30) Priority: 18.06.2021 CN 202110680300
(43) Date of publication of application: 21.12.2022
(73) Proprietor: Apollo Intelligent Connectivity (Beijing) Technology Co., Ltd., Beijing 100176 (CN)
(72) Inventor: XING, Liang, Beijing (CN); SONG, Shuqing, Beijing (CN); YANG, Wentao, Beijing (CN); ZHAO, Shuaishuai, Beijing (CN); LUO, Qionghua, Beijing (CN); WANG, Lifeng, Beijing (CN); FENG, Yunchan, Beijing (CN); WANG, Tao, Beijing (CN); CAO, Xiaochen, Beijing (CN); WU, Fuchuang, Beijing (CN); WU, Yi, Beijing (CN)
(74) Representative: Wynne-Jones IP Limited

(56) References cited:
- WO-A1-2018/203910
- JP-A- 2006 321 359
- JP-A- 2013 098 637
- KR-A- 20200 065 473
- US-A1- 2018 285 635
- US-A1- 2020 202 149
- US-A1- 2020 408 008
- US-B1- 10 515 535

## Description

### TECHNICAL FIELD

The present disclosure relates to the technical field of driving training, and in particular to the technical field of vehicle doors.

### BACKGROUND

Dutch Reach is a way for a student in the Netherlands to open a vehicle door, that is, he/she always uses a hand farther from the vehicle door when opening the vehicle door, thus reducing the blind area. Simply put, a left-hand driver opens the vehicle door with his/her right hand, while a right-hand driver opens the vehicle door with his/her left hand. In this way, his/her upper body also inertially rotates, and his/her head and shoulders also naturally rotate. In the process of rotation, his/her eyes will first observe the situation behind a vehicle through a rearview mirror, and after turning around, his/her eyes will naturally look outward and rearward. This complete action makes it possible to better see whether there is a pedestrian or a moving vehicle behind the vehicle, thereby avoiding many unnecessary accidents. On the contrary, when opening the vehicle door with a hand closer to the vehicle door, if the student pays no special attention to the rear situation, he/she will naturally push the vehicle door directly outward, and has no time to observe the rear situation, which may easily lead to accidents.

In the motor vehicle driving training scene, a coach usually trains a student in the Dutch Reach by oral teaching. There is a situation where supervision is not in place. Therefore, the training effect of the Dutch Reach on the student is poor.

### SUMMARY

The present disclosure provides a vehicle door, a vehicle and a driving training system.

According to the invention, there is provided a vehicle door, including:
a door body, wherein a door handle is provided on an inner side of the door body; and
a target object detection apparatus, provided on the inner side of the door body, wherein the target object detection apparatus is configured for detecting whether there is a target object at a target area under a preset condition, and the target area is formed on the inner side of the door body and spaced apart from the door handle by a preset distance; and a vehicle door state detection apparatus, configured for sending a vehicle door opening signal to the target object detection apparatus in a case where the vehicle door is in an open state, wherein the target object detection apparatus is configured for detecting whether there is the target object at the target area under a condition that the vehicle door opening signal is received,wherein the target object detection apparatus is configured for detecting the target area in response to the vehicle door opening signal, and generating a first detection signal in a case where it is detected that there is the target object at the target area; and wherein the target object detection apparatus is further configured for detecting the target area in response to the vehicle door opening signal, and generating a second detection signal in a case where it is detected that there is no target object at the target area.

According to another aspect of the present disclosure, there is also provided a vehicle, including the vehicle door according to the above embodiment of the present disclosure.

According to another aspect of the present disclosure, there is also provided a driving training system, including:
the vehicle according to the invention;
a teaching terminal device, in communication with the target object detection apparatus of the vehicle and/or the control apparatus of the vehicle.

According to the technology of the embodiment of the present disclosure, a user's door opening action can be detected in the opening process of the vehicle door, especially in the training scene for opening the vehicle door using the Dutch Reach, it can be supervised whether the user uses one hand to open the vehicle door and at the same time puts the other hand at the target area of the door body in accordance with the requirements of the Dutch Reach, so as to achieve the purpose of supervising the use's door opening action, thereby improving the training effect and helping the user develop a good door opening habit.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The above and other features, advantages and aspects of various embodiments of the present disclosure will become more apparent when taken in conjunction with the accompanying drawings and with reference to the following detailed description. The same or similar reference numerals refer to the same or similar elements throughout the drawings, wherein:
FIG. 1 shows a structural schematic diagram of a vehicle door according to an embodiment of the present disclosure;
FIG. 2 shows a schematic diagram of the installation of a target object detection apparatus of a vehicle door in a groove according to an embodiment of the present disclosure;
FIG. 3 shows a driving training system according to an embodiment of the present disclosure.

Description of reference numerals:
vehicle door 1;
door body 10; door handle 11; target area 12; groove 13; boss structure 14;
target object detection apparatus 20.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

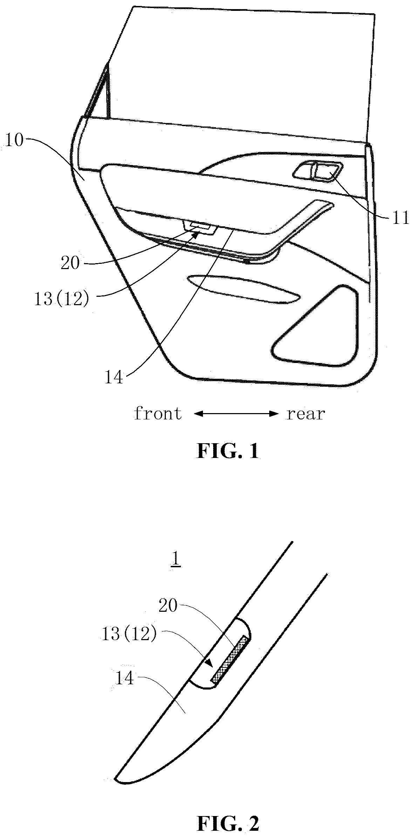

A vehicle door 1 according to an embodiment of the present disclosure will be described below with reference to FIGs. 1 and 2.

As shown in FIG. 1, the vehicle door 1 according to the embodiment of the present disclosure includes a door body 10 and a target object detection apparatus 20.

Specifically, a door handle 11 is provided on an inner side of the door body 10. The target object detection apparatus 20 is provided on the inner side of the door body 10. The target object detection apparatus 20 is configured for detecting whether there is a target object at a target area 12 under a preset condition. The target area 12 is formed on the inner side of the door body 10 and spaced apart from the door handle 11 by a preset distance.

It can be understood that the inner side of the door body 10 refers to a side of the door body 10 facing an interior space of the vehicle. The door handle 11 is in transmission connection with a door lock apparatus of the vehicle door 1. A user can unlock the door lock apparatus by manipulating the door handle 11 with his/her hand, to open the vehicle door 1 in a closed state.

Illustratively, the target object can be a hand of a driver or an occupant, that is, the target object detection apparatus 20 is configured for detecting whether there is the hand of the user or the occupant at the target area 12 under the preset condition.

Herein, the preset condition is that the vehicle door 1 is about to be opened or is being opened. More specifically, the preset condition can be that the target object detection apparatus 20 receives a vehicle door 1 opening signal or that the target object detection apparatus 20 receives a detection instruction from a control apparatus of the vehicle.

More specifically, the vehicle door 1 opening signal can be generated by a vehicle door state detection apparatus when detecting that the door lock apparatus of the vehicle door 1 is unlocked, or can be generated by the vehicle door state detection apparatus when detecting that the working state of the vehicle door 1 is changed to an open state. A detection signal can be directly generated by the control apparatus of the vehicle.

In one specific application example, for the training scene about the Dutch Reach in the driving training, when opening the vehicle door 1, a student needs to put one hand near a side of the vehicle door 1 at the target area 12, and at the same time use the other hand far away from the side of the vehicle door 1 to manipulate the door handle 11 to open the vehicle door 1, in accordance with the requirements of the Dutch Reach. In short, in a case where the student is in a left-hand driving cab, the student needs to put his/her left hand at the target area 12 and at the same time manipulate the door handle 11 with his/her right hand to open the vehicle door; in a case where the student is in a right-hand driving cab, the student needs to put his/her right hand at the target area 12 and at the same time manipulate the door handle 11 with his/her left hand to open the vehicle door. Thus, in the process of opening the vehicle door 1, the upper body of the student also inertially rotates with the vehicle door 1, and the head and shoulders also naturally rotate. In the process of rotation, the eyes will first observe the situation behind the vehicle through a rearview mirror, and after turning around, the eyes will naturally look outward and rearward, so as to achieve the action essentials of the Dutch Reach.

In the process of manipulating the door handle 11 and opening the vehicle door 1 by the student with one hand, in response to the vehicle door 1 opening signal or the detection instruction, the target object detection apparatus 20 detects whether there is the other hand of the student at the target area 12. More specifically, in a case where it is detected that there is the other hand of the student at the target area 12, a first detection signal is generated; in a case where it is detected that there is no the other hand of the student at the target area 12, a second detection signal is generated. Thus, it may be detected whether the student's door opening action conforms to the Dutch Reach, so as to achieve the purpose of supervising the student on the training of the Dutch Reach.

Preferably, for the purpose of improving the accuracy of supervision on the Dutch Reach, and preventing the student from triggering the target object detection apparatus 20 while manipulating the door handle 11 with one hand to bypass the detection of the target object detection apparatus 20, the preset distance between the target area 12 and the door handle 11 can be greater than a maximum distance that the student can reach while manipulating the door handle 11 with one hand.

It should be noted that the embodiment of the present disclosure does not define a specific form of the target object detection apparatus 20, as long as the purpose of detecting whether there is the target object at the target area 12 can be achieved. For example, the target object detection apparatus 20 can specifically be a pressure sensor, a capacitance sensor or a mechanical button structure.

Also, a specific disposed position of the target object detection apparatus 20 on the vehicle door 1 is not defined as well, as long as the detection range of the target object detection apparatus 20 covers the target area 12. For example, the target object detection apparatus 20 can be specifically disposed at the target area 12.

In addition, in the embodiment of the present disclosure, the vehicle door 1 can be the vehicle door 1 at the side of the main driver or the vehicle door 1 at the side of the co-driver. For the driving training scene, preferably, the vehicle door 1 can be the vehicle door 1 at the side of the main driver.

According to the vehicle door 1 of the embodiment of the present disclosure, by disposing, on the inner side of the door body 10, the target object detection apparatus 20 configured for detecting whether there is the target object at the target area 12 spaced apart from the door handle 11 under the preset condition, the door opening action of the user during the opening process of the vehicle door can detected, especially in the training scene for opening the vehicle door 1 using the Dutch Reach, it can be supervised whether the user uses one hand to open the vehicle door 1 and at the same time puts the other hand at the target area 12 of the door body 10 in accordance with the requirements of the Dutch Reach, so as to achieve the purpose of supervising the user's door opening action, thereby improving the training effect and helping the user to develop a good door opening habit.

As shown in FIG. 2, in one implementation, the door body 10 is provided with a groove 13 for accommodating a target object, an interior of the groove 13 defines the target area 12, and the target object detection apparatus 20 is provided at the target area 12.

Illustratively, an inner side door panel of the door body 10 is provided with a boss structure 14 protruding toward the interior of the vehicle body, and an upper surface of the boss structure 14 forms a relatively flat plane. Herein, the upper surface of the boss structure 14 is located below the door handle 11, and a part of the upper surface of the boss structure 14 is recessed downward to form the groove 13. An upper end of the groove 13 is set to be open, so that student can put his/her hand into the groove 13 to manipulate the vehicle door 1. Accordingly, the target object detection apparatus 20 is also disposed in the groove 13, so that the detection range of the target object detection apparatus 20 covers the target area 12 inside the groove 13.

Thus, in the process of opening the vehicle door 1 by the student in accordance with the Dutch Reach, the student can manipulate the door handle 11 with one hand and at the same time reach into the groove 13 with the other hand to manipulate the door body 10, which is beneficial to improve the convenience of the student to open the vehicle door 1 in accordance with the Dutch Reach, so that the student can adapt to the opening action of the Dutch Reach more quickly.

In another example of the present disclosure, an armrest is provided on the inner side of the vehicle door 1, and the armrest is spaced apart from the door handle 11 by a preset distance. Herein, a semi-enclosed area is defined between the armrest and the inner surface of the vehicle door 1, and the semi-enclosed area is the target area 12. The target object detection apparatus 20 can be disposed on the armrest, or at a position, corresponding to the armrest, of the door body 10, so that the detection range of the target object detection apparatus 20 covers the target area 12.

In one implementation, the target area 12 is located in front of the door handle 11 in a front-rear direction of the door body 10.

For example, in the front-rear direction of the door body 10, the groove 13 defining the target area 12 or the armrest is spaced apart from the door handle 11, and the groove 13 or the armrest is located behind the door handle 11, so that the target area 12 is formed behind the door handle 11.

It can be understood that, in accordance with the action requirements of Dutch Reach, the student needs to put one hand far away from the vehicle door 1 at the target area 12 while manipulating the door handle 11 with the other hand near the vehicle door 1 to open the vehicle door 1. By disposing the target area 12 in front of the door handle 11, it is possible to make one hand of the student far away from the vehicle door 1 behind the other hand near the vehicle door 1 during the opening process of the vehicle door. Therefore, it is possible to increase the turning range of the student in a direction toward the rear side of the vehicle, which is beneficial for the student to observe the situation behind the vehicle as much as possible in the process of opening the vehicle door 1.

In one implementation, the vehicle door 1 further includes a vehicle door state detection apparatus, configured for detecting the working state of the vehicle door 1, and sending a vehicle door 1 opening signal to the target object detection apparatus 20 in a case where the vehicle door 1 is in an open state. The target object detection apparatus 20 is in communication with the vehicle door state detection apparatus, and the target object detection apparatus 20 is configured for detecting whether there is a target object at the target area 12 under a condition that the vehicle door 1 opening signal is received.

Illustratively, the vehicle door state detection apparatus can be in electrical communication with the control apparatus of the vehicle. In a case where the door lock apparatus is unlocked, the control apparatus controls the vehicle door state detection apparatus to generate a vehicle door 1 opening signal and send the vehicle door 1 opening signal to the target object detection apparatus 20. In response to the vehicle door 1 opening signal, the target object detection apparatus 20 detects whether there is the target object at the target area 12.

In another example of the present disclosure, the vehicle door state detection apparatus can also be a sensor disposed on the vehicle door 1 or the vehicle body, and configured for detecting the position of the vehicle door 1. A vehicle door 1 opening signal is generated in a case where that vehicle door 1 is no long in a closed position and the vehicle door 1 opening signal is sent to the target object detection apparatus 20.

By disposing the vehicle door state detection apparatus, it is possible to send the vehicle door 1 opening signal to the target object detection apparatus 20 in a case where the working state of the vehicle door 1 is about to be switched to the open state or has been switched to the open state, so that the target object detection apparatus 20 can detect the target area 12 according to the vehicle door 1 opening signal.

In one implementation, the target object detection apparatus 20 is configured for detecting the target area 12 in response to the vehicle door 1 opening signal, and generating a first detection signal in a case where it is detected that there is a target object at the target area 12.

Illustratively, the target object detection apparatus 20 is in communication with the control apparatus of the vehicle. After detecting the target area 12, the target object detection apparatus 20 generates a detection signal and then sends the detection signal to the control apparatus. The control apparatus generates a corresponding detection result based on the detection signal and sends the detection result to a vehicle-mounted terminal device, which generates training data based on the detection result and prompts the student or coach through screen display or voice broadcast.

In one specific example, the control apparatus generates a first detection result based on the first detection signal and sends the first detection result to the vehicle-mounted terminal device, and the vehicle-mounted terminal device broadcasts a voice prompt that "the student has completed the door opening action in accordance with the Dutch Reach" based on the first detection result.

In another embodiment, the target object detection apparatus 20 is further configured for detecting the target area 12 in response to the vehicle door 1 opening signal, and generating a second detection signal in a case where it is detected that there is no target object at the target area 12.

In one specific example, the control apparatus generates a second detection result based on the second detection signal and sends the second detection result to the vehicle-mounted terminal device, and the vehicle-mounted terminal device broadcasts a voice prompt that "the student has failed to complete the door opening action in accordance with the Dutch Reach" based on the second detection result.

Through the above implementations, the target object detection apparatus 20 is configured for generating a corresponding detection signal according to the detection condition of the target object, and then the control apparatus of the vehicle and the vehicle-mounted terminal device can generate a corresponding detection result for correspondingly display and broadcast a voice prompt to feed back the student's training situation to the student or coach.

In one implementation, the target object detection apparatus 20 is a photoelectric sensor, which includes a transmitting module and a receiving module oppositely disposed at the target area 12.

In one specific example, the transmitting module is aligned with the receiving module to transmit a light beam, wherein the transmitting module can adopt a light emitting diode, a laser diode or an infrared emitting diode, and the receiving module can adopt a photodiode. When the photodiode is under the condition of no light, the reverse current thereof is very small, which is called the dark current of the photodiode; when the photodiode is under the condition of light, the carriers are excited to generate electron-holes, which are called photo-carriers. Under the action of an external electric field, the photo-carriers participate in conduction and form a reverse current much larger than the dark current. This reverse current is called photocurrent. The magnitude of the photocurrent is proportional to the light intensity, so an electrical signal that changes with the light intensity can be obtained on a load resistor.

It can be understood that the transmitting module and the receiving module can be disposed oppositely and spaced apart in the target area 12, and whether the student's hand is put at the target area 12 will affect the magnitude of the luminous flux of the light beam received by the receiving module. Based on this, a corresponding electrical signal can be generated according to the magnitude of the current generated by the receiving module, so as to reflect whether there is a target object at the target area 12.

Through the above implementation, the detection function of the target object detection apparatus 20 for the target object can be realized, and the sensitivity is high, so that it can be timely and effectively determined whether the student puts his/her hand at the target area 12 in the process of opening the vehicle door 1.

In one implementation, the target object detection apparatus 20 is a pressure sensor located at the target area 12.

Illustratively, the target object detection apparatus 20 can adopt a capacitive pressure sensor. The capacitive pressure sensor can be provided at the groove 13 defining the target area 12 or the armrest, to detect the force applied by the target object at the target area 12, so as to detect whether there is a target object at the target area 12.

It can be understood that in a case where the pressure sensor detects a pressure signal, the pressure sensor outputs a low-level signal, and in a case where the pressure sensor does not detect a pressure signal, the pressure sensor outputs a high-level signal. Based on this, according to different signals output by the pressure sensor, it can be determined whether there is a target object at the target area 12, that is, whether the student puts his/her hand at the target area 12 in the process of opening the vehicle door 1, so as to detect the student's door opening action.

As another aspect of the embodiment of the present disclosure, a vehicle is also provided.

The vehicle according to the embodiment of the present disclosure includes the vehicle door according to the above embodiment of the present disclosure.

Illustratively, the vehicle door can be disposed at the side of the main driver seat of the vehicle.

According to the vehicle of the embodiment of the present disclosure, by using the vehicle door according to the above embodiment of the present disclosure, the door opening action of the user in the opening process of the vehicle door can detected especially in the training scene for opening the vehicle door using the Dutch Reach, it can be supervised whether the user opens the vehicle door with one hand while putting the other hand at the target area of the door body according to the requirements of the Dutch Reach, so as to achieve the purpose of supervising the student's door opening action, thereby improving the training effect and helping the student to develop a good door opening habit.

In one implementation, the vehicle further includes a control apparatus. The control apparatus is in communication with the target object detection apparatus. The control apparatus is configured for sending a detection instruction to the target object detection apparatus, and the target object detection apparatus is configured for detecting whether there is a target object at the target area under a condition that the detection instruction is received.

Illustratively, in the driving training scene, in a special practice about whether the student's door opening action meets the action requirements of the Dutch Reach, a detection instruction can be sent to the target object detection apparatus by the control apparatus, so that the target object detection apparatus can be started and can detect whether there is a target object in the target area.

Thus, the special practice for the student's door opening action may be realized, to develop the student's good door opening habit.

In one implementation, the control apparatus is further configured for receiving a detection signal from the target object detection apparatus, and generating a detection result indicating whether a violation has occurred or not according to the detection signal.

In one specific application example, the vehicle of the embodiment of the present disclosure can be a teaching vehicle applied to a driving training scene. The control apparatus is in communication with the target object detection apparatus, so that the control apparatus receives a detection signal from the target object detection apparatus, and generates a corresponding detection result according to the detection signal.

For example, in the process of opening the vehicle door by the student, in a case where the target object detection apparatus detects that there is the student's hand at the target area, a first detection signal is generated. The control apparatus receives the first detection signal and generates a first detection result, which indicates the student's door opening action does not violate a rule. In a case where the target object detection apparatus detects that there is not the student's hand at the target area, a second detection signal is generated. The control apparatus receives the second detection signal and generates a second detection result, which indicates the student's door opening action violates a rule.

Through the above implementation, the detection result indicating whether the student's door opening action violates a rule or not can be obtained according to the detection signal sent by the target object detection apparatus, so as to achieve the purpose of supervising whether the student's door opening action meets the requirements of the Dutch Reach.

In one implementation, the vehicle further includes a vehicle-mounted terminal device. The vehicle-mounted terminal device is in communication with the control apparatus to receive the detection result from the control apparatus.

In one specific example, the control apparatus generates a first detection result based on the first detection signal and sends the first detection result to the vehicle-mounted terminal device. The vehicle-mounted terminal device generates corresponding training data based on the first detection result, and prompts the student or coach by means of screen display or voice broadcast. For example, the voice prompt that "the student has completed the door opening action in accordance with the Dutch Reach" can be broadcast. The control apparatus generates a second detection result based on the second detection signal and sends the second detection result to the vehicle-mounted terminal device. The vehicle-mounted terminal device generates corresponding training data based on the second detection result, and prompts the student or coach by means of screen display or voice broadcast. For example, the voice prompt that "the student has failed to complete the door opening action in accordance with the Dutch Reach" can be broadcast.

According to the above implementation, it is possible to broadcast to the student or coach in real time whether the student's door opening action meets the action requirements of the Dutch Reach, so as to evaluate the student's door opening action in real time.

As another aspect of the embodiment of the present disclosure, a driving training system is also provided.

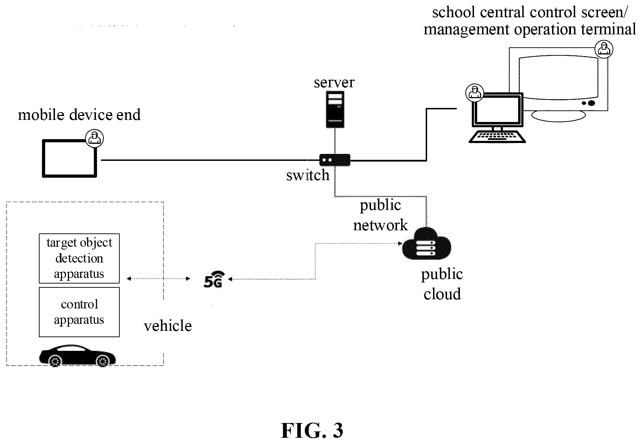

As shown in FIG. 3, the driving training system according to the embodiment of the present disclosure includes the vehicle according to the above embodiment of the present disclosure and a teaching terminal device. The teaching terminal device is in communication with the target object detection apparatus of the vehicle and/or the control apparatus of the vehicle.

Illustratively, the driving training system includes a server end, a teaching terminal device and a vehicle. The server end includes a server and a switch, the teaching terminal device is in communication with the server through the switch, and the vehicle's routing device is in communication with the server through the switch. More specifically, the teaching terminal device may include a central control end and a mobile device end, wherein the central control terminal can be a central control screen integrated with a management operating system.

In one specific example, the target object detection apparatus of the vehicle is in communication with a school server through the routing device and the switch, so that the target object detection apparatus sends a detection signal to the school server, which generates corresponding training data according to the detection signal, and sends the training data to the teaching terminal device, to show the student's training situation on the teaching terminal device.

In another specific example, the control apparatus of the vehicle generates a corresponding detection result based on the detection signal sent by the target object detection apparatus, and then sends the detection result to the teaching terminal device through the routing device and the switch, to show the student's training situation on the teaching terminal device.

According to the driving training system of the embodiment of the disclosure, the purpose of supervising the student's door opening action can achieved by utilizing the vehicle according to the above embodiment of the disclosure, and the coach is caused to master the student's training situation in real time through the teaching terminal device, and the special training for the Dutch Reach is beneficial to improve the training effect and helping the student to develop a good door opening habit.

In the description of this specification, it is to be appreciated that the orientation or positional relationships indicated by the terms "central", "longitudinal", "transverse", "length", "width", "thickness", "upper", "lower", "front" ", "rear", "left", "right", "vertical", "horizontal", "top", "bottom", "inner", "outer", "clockwise", "counterclockwise", "axial", "radial", "circumferential", etc. are based on orientation or positional relationships shown based on the drawings, and they are only for the convenience of describing the present disclosure and simplifying the description, rather than indicating or implying that the apparatus or element must have a specific orientation, or must be constructed and operated in a specific orientation, and therefore they shall not be understood as a limitation to the present disclosure.

In addition, the terms "first" and "second" are only used for descriptive purposes, and are not to be construed as indicating or suggesting relative importance or implicitly indicating the number of indicated technical features. Thus, the features defined with "first" and "second" may explicitly or implicitly include one or more of these features. In the description of the present disclosure, "a plurality of" means two or more, unless otherwise expressively and specifically defined.

In the present disclosure, unless otherwise expressively specified or defined, the terms "mount", "link", "connect", "fix", etc. should be understood in the broad senses, for example, may be a fixed connection, a detachable connection or integration; may be a mechanical connection, an electrical connection or communication; and may be a direction connection, an indirect connection through an intermediate medium, or internal communication between two elements or an interaction therebetween. For those of ordinary skill in the art, the specific meanings of the above terms in the present disclosure may be understood according to specific circumstances.

In the present disclosure, unless otherwise expressively specified or defined, a first feature being "on" or "under" a second feature may indicate a direct contact between the first and second features, or an indirect contact therebetween via another feature. Further, the first feature being "on", "above", or "over" the second feature may indicate that the first feature is directly or obliquely above the second feature, or merely indicate that the level of the first feature is higher than that of the second feature. The first feature being "under", "below", or "beneath" the second feature may indicate that the first feature is directly or obliquely below the second feature, or merely indicate that the level of the first feature is lower than that of the second feature.

The above disclosure provides many different implementations or examples for implementing different structures of the present disclosure. In order to simplify the disclosure of the present disclosure, components and arrangements of specific examples have been described above. Of course, they are only examples and are not intended to limit the present disclosure. In addition, the present disclosure may repeat reference numerals and/or reference letters in different examples, and this repetition is for the purpose of simplification and clarity, and itself does not indicate the relationship between the various implementations and/or arrangements discussed.

The above implementations are not to be construed as limiting the scope of the present disclosure. It will be apparent to those skilled in the art that various modifications, combinations, sub-combinations and substitutions are possible, depending on design requirements and other factors.

## Claims

1. A vehicle door (1), comprising:
a door body (10), wherein a door handle (11) is provided on an inner side of the door body (10);
a target object detection apparatus (20), provided on the inner side of the door body (10), wherein the target object detection apparatus (20) is configured for detecting whether there is a target object at a target area (12) under a preset condition, and the target area (12) is formed on the inner side of the door body (10) and spaced apart from the door handle (11) by a preset distance; and
a vehicle door state detection apparatus, configured for sending a vehicle door opening signal to the target object detection apparatus (20) in a case where the vehicle door (1) is in an open state, wherein the target object detection apparatus (20) is configured for detecting whether there is the target object at the target area (12) under a condition that the vehicle door opening signal is received,
wherein the target object detection apparatus (20) is configured for detecting the target area (12) in response to the vehicle door opening signal, and generating a first detection signal in a case where it is detected that there is the target object at the target area (12); and
wherein the target object detection apparatus (20) is further configured for detecting the target area (12) in response to the vehicle door opening signal, and generating a second detection signal in a case where it is detected that there is no target object at the target area (12).

2. The vehicle door (1) of claim 1, wherein the door body (10) is provided with a groove (13) for accommodating the target object, an interior of the groove (13) defines the target area (12), and the target object detection apparatus (20) is provided at the target area (12).

3. The vehicle door (1) of claim 1 or 2, wherein the target area (12) is located in front of the door handle (11) in a front-rear direction of the door body (10).

4. The vehicle door (1) of any one of claims 1 to 3, wherein the target object detection apparatus (20) is a photoelectric sensor, which comprises a transmitting module and a receiving module oppositely disposed at the target area (12).

5. The vehicle door (1) of any one of claims 1 to 3, wherein the target object detection apparatus (20) is a pressure sensor located at the target area (12).

6. A vehicle, comprising the vehicle door (1) of any one of claims 1 to 5.

7. The vehicle of claim 6, further comprising:
a control apparatus, in communication with the target object detection apparatus (20), wherein the control apparatus is configured for sending a detection instruction to the target object detection apparatus (20), and the target object detection apparatus (20) is configured for detecting whether there is the target object at the target area (12) under a condition that the detection instruction is received.

8. The vehicle of claim 7, wherein the control apparatus is further configured for receiving a detection signal from the target object detection apparatus (20), and generating a detection result indicating whether a violation has occurred or not according to the detection signal.

9. The vehicle of claim 8, further comprising:
a vehicle-mounted terminal device, in communication with the control apparatus, to receive the detection result from the control apparatus.

10. A driving training system, comprising:
the vehicle of any one of claims 6 to 9; and
a teaching terminal device, in communication with the target object detection apparatus (20) of the vehicle and/or the control apparatus of the vehicle.

## Patentansprüche

1. Fahrzeugtür (1), umfassend:
einen Türkörper (10), wobei an einer Innenseite des Türkörpers (10) ein Türgriff (11) bereitgestellt ist;
eine Zielobjekterkennungsvorrichtung (20), die auf der Innenseite des Türkörpers (10) bereitgestellt ist, wobei die Zielobjekterkennungsvorrichtung (20) konfiguriert ist, um zu erkennen, ob ein Zielobjekt an einem Zielbereich (12) unter einer voreingestellten Bedingung vorhanden ist, und der Zielbereich (12) auf der Innenseite des Türkörpers (10) gebildet und um einen voreingestellten Abstand von dem Türgriff (11) beabstandet ist; und
eine Fahrzeugtürzustandserkennungsvorrichtung, die konfiguriert ist, um ein Fahrzeugtüröffnungssignal an die Zielobjekterkennungsvorrichtung (20) zu senden, in einem Fall, in dem die Fahrzeugtür (1) in einem offenen Zustand ist, wobei die Zielobjekterkennungsvorrichtung (20) konfiguriert ist, um zu erkennen, ob das Zielobjekt am Zielbereich (12) unter einer Bedingung vorhanden ist, dass das Fahrzeugtüröffnungssignal empfangen wird,
wobei die Zielobjekterkennungsvorrichtung (20) konfiguriert ist, um den Zielbereich (12) als Reaktion auf das Fahrzeugtüröffnungssignal zu erkennen und ein erstes Erkennungssignal in einem Fall zu erzeugen, in dem erkannt wird, dass das Zielobjekt am Zielbereich (12) vorhanden ist; und
wobei die Zielobjekterkennungsvorrichtung (20) ferner konfiguriert ist, um den Zielbereich (12) als Reaktion auf das Fahrzeugtüröffnungssignal zu erkennen und ein zweites Erkennungssignal in einem Fall zu erzeugen, in dem erkannt wird, dass Ken Zielobjekt am Zielbereich (12) vorhanden ist.

2. Fahrzeugtür (1) nach Anspruch 1, wobei der Türkörper (10) mit einer Nut (13) zur Aufnahme des Zielobjekts versehen ist, ein Innenraum der Nut (13) den Zielbereich (12) definiert und die Zielobjekterkennungsvorrichtung (20) an dem Zielbereich (12) bereitgestellt ist.

3. Fahrzeugtür (1) nach Anspruch 1 oder 2, wobei sich der Zielbereich (12) vor dem Türgriff (11) in einer Vorne-nach-hinten-Richtung des Türkörpers (10) befindet.

4. Fahrzeugtür (1) nach einem der Ansprüche 1 bis 3, wobei die Zielobjekterkennungsvorrichtung (20) eine Lichtschranke ist, die ein Übertragungsmodul und ein Empfangsmodul umfasst, die an dem Zielbereich (12) gegenüberliegend angeordnet sind.

5. Fahrzeugtür (1) nach einem der Ansprüche 1 bis 3, wobei die Zielobjekterkennungsvorrichtung (20) ein Drucksensor ist, der sich am Zielbereich (12) befindet.

6. Fahrzeug, umfassend die Fahrzeugtür (1) nach einem der Ansprüche 1 bis 5.

7. Fahrzeug nach Anspruch 6, ferner umfassend:
eine Steuervorrichtung in Kommunikation mit der Zielobjekterkennungsvorrichtung (20), wobei die Steuervorrichtung konfiguriert ist, um eine Erkennungsanweisung an die Zielobjekterkennungsvorrichtung (20) zu senden, und die Zielobjekterkennungsvorrichtung (20) konfiguriert ist, um zu erkennen, ob das Zielobjekt am Zielbereich (12) unter einer Bedingung vorliegt, dass die Erkennungsanweisung empfangen wird.

8. Fahrzeug nach Anspruch 7, wobei die Steuervorrichtung ferner konfiguriert ist, um ein Erkennungssignal von der Zielobjekterkennungsvorrichtung (20) zu empfangen und ein Erkennungsergebnis zu erzeugen, das angibt, ob gemäß dem Erkennungssignal eine Übertretung aufgetreten ist oder nicht.

9. Fahrzeug nach Anspruch 8, ferner umfassend:
ein fahrzeugmontiertes Endgerät in Kommunikation mit der Steuervorrichtung, um das Erkennungsergebnis von der Steuervorrichtung zu empfangen.

10. Fahrtrainingssystem, umfassend:
das Fahrzeug nach einem der Ansprüche 6 bis 9; und
ein Lehrendgerät in Kommunikation mit der Zielobjekterkennungsvorrichtung (20) des Fahrzeugs und/oder der Steuervorrichtung des Fahrzeugs.

## Revendications

1. Portière de véhicule (1), comprenant :
un corps de portière (10), dans laquelle une poignée de portière (11) est prévue sur un côté intérieur du corps de portière (10) ;
un appareil de détection d'objet cible (20), prévu sur le côté intérieur du corps de portière (10), dans laquelle l'appareil de détection d'objet cible (20) est configuré pour détecter s'il y a un objet cible au niveau d'une zone cible (12) dans une condition prédéfinie, et la zone cible (12) est formée sur le côté intérieur du corps de portière (10) et éloignée de la poignée de portière (11) d'une distance prédéfinie ; et
un appareil de détection d'état de portière de véhicule, configuré pour envoyer un signal d'ouverture de portière de véhicule à l'appareil de détection d'objet cible (20) dans un cas où la portière de véhicule (1) est dans un état ouvert, dans laquelle l'appareil de détection d'objet cible (20) est configuré pour détecter s'il y a l'objet cible au niveau de la zone cible (12) à condition que le signal d'ouverture de portière de véhicule soit reçu,
dans laquelle l'appareil de détection d'objet cible (20) est configuré pour détecter la zone cible (12) en réponse au signal d'ouverture de portière de véhicule, et générer un premier signal de détection dans un cas où il est détecté qu'il y a l'objet cible au niveau de la zone cible (12) ; et
dans laquelle l'appareil de détection d'objet cible (20) est en outre configuré pour détecter la zone cible (12) en réponse au signal d'ouverture de portière de véhicule, et générer un second signal de détection dans un cas où il est détecté qu'il n'y a aucun objet cible au niveau de la zone cible (12).

2. Portière de véhicule (1) selon la revendication 1, dans laquelle le corps de portière (10) est pourvu d'une rainure (13) pour recevoir l'objet cible, un intérieur de la rainure (13) définit la zone cible (12), et l'appareil de détection d'objet cible (20) est prévu au niveau de la zone cible (12).

3. Portière de véhicule (1) selon la revendication 1 ou 2, dans laquelle la zone cible (12) se trouve devant la poignée de portière (11) dans une direction avant-arrière du corps de portière (10).

4. Portière de véhicule (1) selon l'une quelconque des revendications 1 à 3, dans laquelle l'appareil de détection d'objet cible (20) est un capteur photoélectrique, qui comprend un module de transmission et un module de réception disposés de manière opposée au niveau de la zone cible (12).

5. Portière de véhicule (1) selon l'une quelconque des revendications 1 à 3, dans laquelle l'appareil de détection d'objet cible (20) est un capteur de pression situé au niveau de la zone cible (12).

6. Véhicule, comprenant la portière de véhicule (1) selon l'une quelconque des revendications 1 à 5.

7. Véhicule selon la revendication 6, comprenant en outre :
un appareil de commande, en communication avec l'appareil de détection d'objet cible (20), dans lequel l'appareil de commande est configuré pour envoyer une instruction de détection à l'appareil de détection d'objet cible (20), et l'appareil de détection d'objet cible (20) est configuré pour détecter si l'objet cible se trouve au niveau de la zone cible (12) à condition que l'instruction de détection soit reçue.

8. Véhicule selon la revendication 7, dans lequel l'appareil de commande est en outre configuré pour recevoir un signal de détection provenant de l'appareil de détection d'objet cible (20), et générer un résultat de détection indiquant si une violation s'est produite ou non en fonction du signal de détection.

9. Véhicule selon la revendication 8, comprenant en outre :
un dispositif terminal monté sur un véhicule, en communication avec l'appareil de commande, pour recevoir le résultat de détection provenant de l'appareil de commande.

10. Système d'entraînement comprenant :
le véhicule selon l'une quelconque des revendications 6 à 9 ; et
un dispositif terminal d'apprentissage, en communication avec l'appareil de détection d'objet cible (20) du véhicule et/ou l'appareil de commande du véhicule.
